Europäisches Patentamt

(19) European Patent Office

Office européen des brevets

(11) Publication number: **0 113 555**
**B1**

## (12) EUROPEAN PATENT SPECIFICATION

(45) Date of publication of patent specification: **12.08.87**

(51) Int. Cl.⁴: **C 08 J 7/06, B 65 D 65/42**

(21) Application number: **83307488.3**

(22) Date of filing: **08.12.83**

(54) Packaging.

(30) Priority: **10.12.82 GB 8235332**

(43) Date of publication of application:
**18.07.84 Bulletin 84/29**

(45) Publication of the grant of the patent:
**12.08.87 Bulletin 87/33**

(84) Designated Contracting States:
**BE DE FR IT LU NL**

(56) References cited:
**EP-A-0 062 334**
**DE-A-1 032 058**
**FR-A-1 175 228**
**FR-A-2 279 861**
**GB-A- 743 281**
**US-A-2 039 372**
**US-A-3 442 686**
**TRANSACTIONS OF THE INSTITUTE OF METAL FINISHING, vol. 57, no. 2, February 1979, pages 65-69, London, GB J.N.**

**AVARITSIOTIS et al.: "Ion plating onto plastics" THIN SOLID FILMS, vol. 96, no. 2, October 1982, pages 121-127, Lausanne, CH M.I. RIDGE et al.: "Composition control in conducting oxide thin films"**

(73) Proprietor: **The BOC Group plc**
**Hammersmith House**
**London W6 9DX (GB)**

(72) Inventor: **Stern, Max Kim**
**17 Bowyers Close**
**Copmanthorpe York (GB)**

(74) Representative: **Wickham, Michael et al**
**c/o Patent and Trademark Department The BOC Group plc Chertsey Road**
**Windlesham Surrey GU20 6HJ (GB)**

(56) References cited:

**THIN SOLID FILMS, vol. 65, no. 1, January 1980, pages 101-110, Lausanne, CH J.N. AVARITSIOTIS et al.: "The ion plating of durable optical coatings onto plastics" APPLIED PHYSICS LETTERS, vol. 39, no. 8, October 1981, pages 640-642, American Institute of Physics, New York, US J.B. WEBB et al.: "Transparent and highly conductive films of ZnO prepared by rf reactive magnetron sputtering"**

## Description

This invention relates to packaging.

There is a growing requirement in a number of different industries to package the products of such industries in special atmospheres, that is in atmospheres whose respective compositions differ from that of air. For example, it is desirable to package certain foodstuffs in nitrogen (or chosen gas mixtures including nitrogen) so as to lengthen the shelf life of such foodstuffs. Typically, the advantages of using nitrogen atmosphere are that it precludes reaction between the foodstuff and oxygen and prevents moisture from damaging the foodstuff. There are analogous needs to package, for example, electronics components and pharmaceuticals in a dry nitrogen atmosphere. In practice, no plastics packaging material is perfectly impermeable to water vapour and oxygen molecules. Indeed, some common plastics packaging materials such as polyvinyl chlorides (PVC) and nylon have a relatively high permeability to oxygen. In practice, it has proven desirable to use relatively complex laminates in order to obtain a combination of desirable packaging properties. For example, in the packaging of foodstuffs, a laminate comprising a heat sealable plastics material, a plastics material such as polyvinylidene chloride having a relatively low permeability oxygen, and a material such as cellulose on which it is possible to print. European Patent Application EP—A—62 334 forming the base for the preamble of claim 1 relates to a packaging material that comprises a plastics substrate coated with a first material or layer that provides a physical 'barrier' to the diffusion of gases and water vapour through the coated substrate and a second or intermediate material or layer that provides adherence between the first layer of material and the substrate. The coated material is then laminated with a further sheet of plastics material. None of the examples in the aforesaid European Patent Application discloses a material providing good barriers to both water vapour and oxygen while simultaneously being substantially transparent to visible light. There is thus a need for packages formed of alternative packaging materials that are simple to make yet have good "barrier" properties and it is an aim of the present invention to meet this need.

According to the present invention there is provided a package comprising an item or items packaged in a packaging material, the package enclosing a gaseous atmosphere of different composition from that of air, the packaging material being transparent and comprising a plastics substrate bearing a coating of a chemical compound, characterised in that said coating has been deposited on the substrate by an ion plating or magnetron sputtering method.

We have found that preferred packaging materials for use in the invention have substantially reduced permeabilities to water vapour and oxygen and are also substantially transparent. Moreover, the need to employ a separate adherence layer is obviated.

The coating is of a chemical compound which may be deposited by a non-reactive ion plating or magnetron sputtering method. The compound may be a metal oxide. It is preferred that the coating is deposited by a *reactive* ion plating or magnetron sputtering method.

The coating may include relatively heavy metal atoms, that is metal atoms having a relatively high atomic number. Such metals include lead, indium and tin, although the invention is not restricted to the use of such metals. For example, one or more rare earth elements may be used instead to provide a coating. Moreover, the invention is not limited to coatings including metals of relatively high atomic number. It is possible, for example, to use coatings such as aluminium oxide, or silica.

Although we do not wish to be limited by this theory, we believe that deposition of an oxide in particular, by an ion plating or magnetron sputtering method enables relatively large crystals to be formed in the coating, such crystals providing a barrier to the transmission of water vapour, oxygen or other gases.

We believe that coatings of oxides, in particular, to be preferable to coatings of the pure metal or alloy itself. Preferred coatings include indium oxide and tin oxide and mixed tin-indium oxide. The mixed tin-indium oxide may be formed by a reactive ion plating or magnetron sputtering method using a source of a chosen tin-indium alloy.

The relative proportions of oxygen to metal atom or atoms in the coating may be chosen such that the oxide contains less than the stoichiometric quantity of oxygen, or the stoichiometric quantity of oxygen, or, if this can be obtained, more than the stoichiometric quantity of oxygen. In general, it is preferred that the composition of the oxide is such that there is not a substantial deficit of oxygen. This, we believe, helps to keep to a minimum the number of sites in the crystal lattice of the coating through which oxygen can diffuse, although the invention should not be interpreted as being limited in any way by such theory.

The substrate may be of any convenient packaging material. It typically comprises a plastics film. The plastics may be chosen in accordance with the properties other than that of permeability to oxygen and water vapour. For example, it is possible to use relatively cheap plastics which has good heat sealing properties. This facilitates the manufacture of packages from the packaging material according to the invention. The substrate is substantially transparent to visible light. Suitable plastics substrates for use in forming a packaging material according to the present invention include low and high density polythene films, polypropylene films, PVC films, and polyester films.

It is desirable that the plastics film be of a thickness suitable for the desired packaging application. One of the perceived advantages of packaging materials according to the invention is that their respective permeabilities to oxygen and water vapour will depend primarily on the coating.

Typically, the substrate will have a thickness of 40 microns or less. The coating will be appreciably thinner typically having a thickness in the order of a few hundred of nanometers (say less than 500 nm). Preferably, at least if an oxide is the material of which the coating is formed, the thickness of the coating is in the range of 100 to 200 nm.

It is found that coatings of materials such as indium oxide, when deposited by a reactive ion plating method, are substantially transparent to visible light and indeed for many packaging uses it is preferred to form a coating that is substantially transparent to visible light. It is therefore possible to form a transparent package according to the invention. Other coatings that can be deposited as layers substantially transparent to visible light include, we believe, zinc oxide, and titanium oxide.

It is moreover possible to deposit a coating of material such as indium oxide by a reactive ion plating or magnetron sputtering method such that the coating is substantially opaque to ultra-violet radiation or at least some wavelengths in the ultra-violet spectrum (i.e. the coated substrate absorbs more radiation than it transmits at a particular wavelength in the ultra-violet spectrum). Such a coating is particularly desirable on packaging materials for use in the packaging of foodstuffs such as potato crisps which are known to develop rancidity relatively rapidly in the presence of oxygen and ultra-violet radiations.

Zinc oxide is a particularly preferred coating as it can be deposited by a reactive ion plating process to form a coating that is substantially transparent to visible light yet substantially opaque to at least some wavelengths in the ultra-violet spectrum.

We have found that packaging materials comprising a polyester (e.g. Melinex Registered Trade Mark coated with indium oxide (deposited by a reactive ion plating method) have a permeability to water vapour of less than 0.5 grammes per square metre of packaging material per day, and a permeability to oxygen of less than 1.0 cubic centimetre per square metre of packaging material per day per atmosphere. These results have been obtained with a Melinex polyester film of 50 microns thickness coated on one side with an indium oxide coating of a thickness measured as 180 nm (plus or minus 10%). The indium oxide had a stoichiometry approximating to the formula $In_2O_3$.

In general, we prefer to select the material of the coating and its thickness such that it produces at least a fivefold and desirably at least a tenfold decrease in both the oxygen permeability and water vapour transmission rate of the substrate.

In packages according to the invention the packaging material encloses a gaseous atmosphere of chosen composition different from that of air. The side of the substrate bearing the coating (assuming that one side only is coated) will normally define the exterior of the surface package. Suitable articles for packaging include electronics components, foodstuffs and other comestibles and pharmaceuticals. The gas may be a gas mixture including commercially pure nitrogen, argon, carbon dioxide. The invention is not, however, limited to choice of gas mixtures.

Ion plating is a technique in which a DC potential or radio frequency bias is applied to or in front of the substrate and a DC or RF glow discharge (or plasma) is struck in an atmosphere of inert gas, for example, argon about the substrate such that the substrate is subject to continual inert gas ion bombardment. The source of the coating is desirably a planar magnetron sputtering source which itself is subject to a discharge. It is possible however to use other kinds of sources particularly those that rely on bombardment of a target by charged or energetic particles (e.g. an electron beam). Evaporative sources are however not preferred. In reactive ion plating there is a partial pressure of a chemically active gas such as oxygen or nitrogen in the vicinity of the substrate such that there will be reaction between the metal sputtering source and the oxygen at the surface of the substrates: thus a metal oxide coating can be formed. With some sources, for example indium, it is possible to deposit a coating by a magnetron sputtering method (preferably a planar magnetron sputtering method) without applying a DC or RF bias to or in front of the substrate. Although such a method can be referred to as an ion plating method, it is not so described herein. The term 'ion plating' is reserved herein for processes in which a DC or RF bias applied to or in front of the substrate.

The substrate typically comprises a roll of plastics film to be coated. It is advanced from a carrier roll to a take up roll through the glow discharge apparatus. The composition of the coating is dependent upon the rate at which oxygen (or nitrogen) is introduced into the apparatus. Thus, by choosing a suitable rate of introduction of oxygen a desired coating may be obtained. A reactive ion plating process suitable for the manufacture of the packaging material according to the invention is described in "The application of ion plating to the continuous coating of flexible plastics sheet", Thin Solid Films, 80 (1981) pp. 31 to 39. M. I. Ridge et al. The reader of the specification is particularly referred to the paper by Ridge et al. and the references cited therein. Another apparatus for performing a reactive ion plating process is described in U.K. Patent Specification 1 489 807 and the reader's attention is also directed to this Patent Specification.

The invention will now be described by way of example with reference to the accompanying drawings, in which:

Figure 1 is a schematic drawing of a first ion plating apparatus for use in coating plastics films;

Figure 2 is a schematic drawing of a second ion plating apparatus for use in coating plastics films;

Figure 3 is a schematic cross-section through a packaging material for use in the invention and

Figure 4 is a schematic plan view of a package according to the invention.

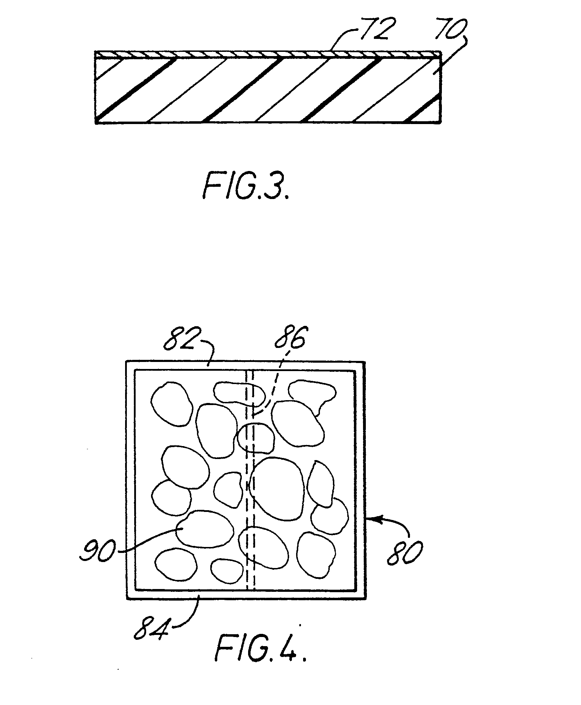

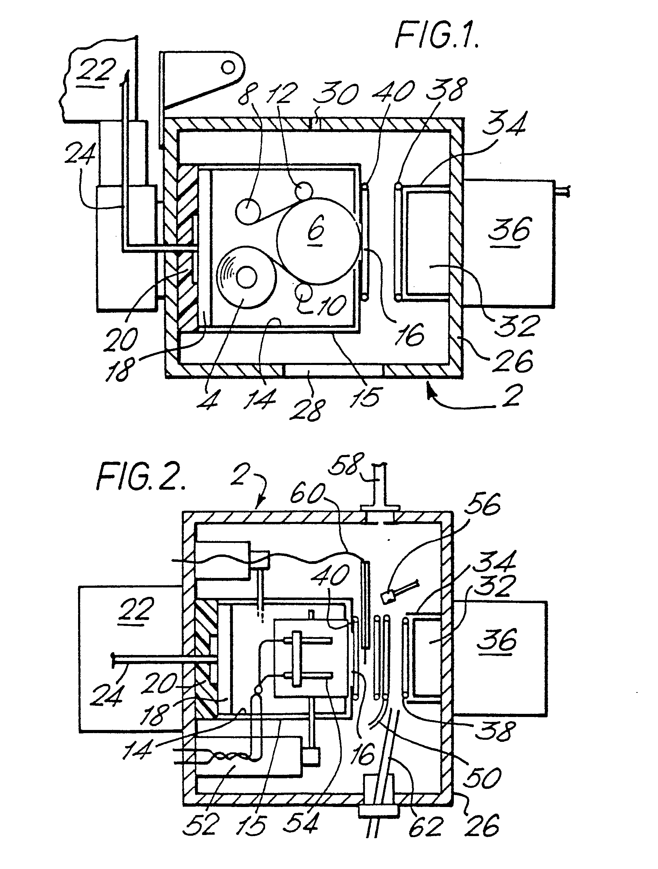

Figure 1 and 2 of the accompanying drawings illustrate schematically the apparatus used to deposit coatings as described in the Examples below.

Referring to Figure 1, an experimental ion plating apparatus 2 is shown. The apparatus 2 includes a set of rollers, including a roller 4 onto which plastics material is fed from the manufacturer's reel (not shown). During coating operation, the plastics film is fed from the feed roller 4 around a main water-cooled roller 6 to a roller 8. The rollers 4, 6 and 8 each have full electronic motor control to ensure the correct tension of the plastics film during operation of the machine.

In addition, rubberised pinch rollers 10 and 12 co-operate with the roller 6 to prevent the plastics film from slipping on the surface of the roller 6. The rollers 4 and 8 act as tensioned unwind and rewind rollers respectively. Once loaded on the roller 4, the plastics material is cut and attached to the roller 8 on which it is rewound during subsequent coating operations.

The rollers 4, 6, 8, 10 and 12 are all located in an inner cage 14 which is in turn located within an outer cage 15. The cages 14 and 15 have contiguous opening 16 facing forwards to permit deposition of a coating on the plastics film as it passes along the opening in operation of the rollers. The opening 16 in the cage 15 is rectangular, being 60 mm by 80 mm.

The cage 14 is provided with water-cooled aluminium platen 18 in a rearward position and in electrically-conductive relationship with the cage 14. The platen 18 is insulated from earth by a polytetrafluoroethylene (PTFE) insulator 20. The drives (not shown) to rollers 4, 6 and 8 are also insulated. A radio frequency generator 22 is adapted to apply a radio frequency potential to the platen 18 through connectors 24. The generator 22 is an automatically controlled and tuned 2 kw Plasma Therm HFS 2000D machine. The connectors 24 are water-cooled. The cage 15 is connected to earth and in effect functions as a second electrode.

The rollers, the cage 14, which acts as an rf cage, the cage 15 which is earthed, and the platen 18 and insulator 20 are all located as a demountable assembly within an evacuable chamber 26, having a port 28 connectible to a vacuum pump (not shown) and a port 30 connectible to a Pirani gauge (not shown) or other vacuum measuring device.

A planar magnetron sputtering source 32 is provided within the chamber 26 opposite the opening 16 in the cage 15. The planar magnetron sputtering source 32 has associated therewith an earth shield 34, and water-cooled arc suppression means 36. The planar magnetron sputtering source has its own potential supply (not shown). A combination of motor generators and electronics supply was used to supply a DC potential to the sputtering source 32. An annular gas distributor 38 is located near to the planar magnetron sputtering source 32 and a similar distributor is about the opening 16 in the cage 15. The gas distributor 38 is connectible to a source (not shown) of argon under pressure and in operation distributes the argon generally radially inwards, and the gas distributor 40 is connectible to a source (not shown) of oxygen under pressure and adapted to distribute the oxygen radially inwards.

In operation, the chamber 26 is continuously evacuated, and typically an rf potential is applied to the platen 18 and the planar magnetron sputtering source 32 is activated. Plastics film is fed from the roller 4 to the roller 8 and passes along the opening 16 and argon and oxygen are passed into the chamber 26. The planar magnetron confines magnetically a toroidal plasma of argon ions about the source to be sputtered. Atoms of the source material are thus emitted therefrom in the direction of the opening 16 in the cage 15. The rf potential creates a glow discharge about the plastics material to be coated, which glow discharge is confined to the region of the main roller 6. Typically a peak-to-peak rf supply of 1000 V may be employed. As the impinging atoms of the source material come into contact with oxygen on the surface of plastics film for the time being alongside the opening, an oxide coating is deposited. The thickness of the coating will depend on a number of parameters including the speed at which the plastics material is fed from the roller 4 to the roller 8. Typically, if the coating is electrically conducting, its resistance is monitored during its deposition and the rate at which oxygen is supplied controlled so as to give a constant resistance during deposition of a coating on a length of plastics film.

If desired, the apparatus shown in Figure 1 may be operated purely as a planar magnetron sputtering apparatus, in which instance no potential is applied to the electrode 18.

The apparatus shown in Figure 2 is generally similar to that shown in Figure 1 but includes an rf discharge coil 50 positioned intermediate the opening 16 and the planar magnetron sputtering source 32. This discharge coil 50 may be used as an alternative means of creating a bias in front of the substrate. The rf potential may be applied either to the electrode 18 or the coil 50 (but not to both) in the ion plating of a substrate. Applying the rf potential to the coil 50 rather than the electrode 18 enables the rollers 4, 6, 8, 10 and 12 to be earthed rather then being subject to an rf potential. For ease of illustration, the rollers 4, 6, 8, 10 and 12 are not shown in Figure 2, but the main drive unit 52 of the rollers is shown. Apart from the use of the coil 50, the operation of the apparatus shown in Figure 2 is generally similar to that shown in Figure 1.

Various means can be employed to control the deposition of coatings on the plastics film. Trailing contacts 54 may be employed to measure the electrical resistance of the coating. A quartz crystal monitor 56 can be used to measure the rate of deposition of the coating. A probe 58 leading to a mass spectrometer (not shown) can be used to measure the concentration of excited metal atoms emitted by the source. A probe 62 leading to a scanning spectrophotometer (not shwon) may alternatively be used to monitor the concentration of metal atoms in the chamber 26. A Langmuir probe 60 may be used to measure the electrical characteristics of the glow discharge and hence to gain a measure of its chemical composition, and the induced dc dias in the coating may also be measured.

The apparatus shown in Figure 1 was used to deposit the coatings in Examples 1 and 2 below, and the apparatus shown in Figure 2 was used to deposit the coatings in Examples 3 to 10 below.

4

The invention is now illustrated by the following Examples. In each Example a length of Melinex (Registered Trade Mark) polyester (a polyethylene terephthalate (PET) 50,000 nm thick and 100 mm wide was coated to form a packaging material. The oxides save those of Examples 1 and 2 were formed by a reactive ion plating method as described with reference to Figure 1. The oxides of Examples 1 and 2 were prepared by a planar magnetron sputtering process *simpliciter*, i.e. no rf potential was applied to the electrode 18. Metal coatings were formed by a method similar to that described with reference to Figure 1, save that no oxygen was supplied to the vacuum chamber 26, and hence a non-reactive ion plating was employed. In all instances, good adherence between the coating and the substrate was obtained without employing any intermediate layer therebetween.

Example 1

An indium oxide coating was deposited. The rate at which oxygen was supplied was determined by the electrical resistance of the coating. The particular rate selected was that required to give an indium oxide coating having a maximum electrical conductivity, the composition of the coating approximating to the formula $In_2O_3$.

Example 2

An indium oxide coating was deposited. The rate at which oxygen was supplied was determined by the electrical resistance of the coating, and was chosen to give an oxide coating containing relatively more oxygen than the coating of Example 1.

Example 3

A zinc oxide coating was deposited. The rate at which oxygen was supplied was determined by measuring the self-induced bias of the coating.

Example 4

Another zinc coating was deposited. The rate at which oxygen was supplied was determined by measuring the self-induced potential bias of the coating.

Example 5

A coating of aluminium oxide was deposited.

The partial pressure of oxygen, and hence its rate of supply, was caused to oscillate such that the average intensity of the emission by aluminium of electromagnetic radiation of 396 nm wavelength was equal to half the sum of such emission at maximum intensity (corresponding to zero oxygen partial pressure) and at minimum intensity (corresponding to the intensity at oxygen over-pressure).

Example 6

A further coating of zinc oxide was deposited. The oxygen partial pressure, and hence its rate of supply, was maintained at a value such that the intensity of the emission by zinc of electromagnetic radiation of 636 nm was kept constant at half the sum of such emission at maximum intensity (corresponding to zero oxygen partial pressure) and at minimum intensity (corresponding to the intensity at oxygen over-pressure).

Example 7

A coating of tin oxide was deposited. The oxygen partial pressure and hence its rate of supply were determined by the resistance of the coating.

The conditions under which the coatings were deposited in Examples 1 to 7 are set out in Table 1 below. In each Example a partial pressure of argon of 3 milliTorr was employed, typically requiring a flow rate of argon of 100 to 120 cubic centimetres per minute.

The following physical properties were then measured in respect of the packaging material of each material.

A. Film thickness
B. Permeability to oxygen
C. Water vapour transmission rate (WVTR)
D. Transmission of light of 550 nm wavelength
E. Transmission of ultra-violet radiation of 360 nm wavelength.

Film thickness was measured using an ellipsometer (except where otherwise stated).

WVTR was measured according to British Standard BS 3177 at 25°C and 75% relative humidity using aluminium dishes almost filled with calcium chloride. The sample area was 50 cm². The coated side of the film was exposed to the high humidity.

Oxygen permeability was measured using the Mocon Paxtran // oxygen permeability tester at 23°C and a moist carrier gas of 1% hydrogen in nitrogen. The uncoated side of the film was exposed to air, the other side to the mixture of hydrogen and nitrogen. Where the material had a low permeability, pure oxygen was

**0 113 555**

used in some examples instead of air, and the results obtained converted to those that would have been obtained had air been used as the test gas.

In Figure 3 there is shown a packaging material according to the invention. It comprises a packaging film substrate 70 bearing on one of its sides a coating 72, said coating having been deposited as a single coherent layer by an ion plating method or a magnetron sputtering method. If desired, both sides may be so coated.

In Figure 4 there is shown a package according to the invention. It comprises a transparent bag 80 formed of packaging material, as shown in Figure 3, heat sealed along the top and bottom edges 82, and 84, and along abutting edges meeting at line 86 at the rear of the bag. The bag contains a foodstuff 90 (e.g. potato crisps) typically in an atmosphere of nitrogen. The manufacture and filling of the bag is conventional save that a packaging material according to the invention is employed.

It is to be appreciated that the packaging material may have a coating different in composition from those described in the Examples above. Essentially, the coating can comprise any metal, metal oxide or metal nitride or other compound which can be deposited by an ion plating method. Desirably, the coating is relatively inert, not being injuriously affected by the atmosphere, is formed of relatively non-toxic substance, and is capable of being printed upon by an industrial printing process. Where it is desirable to have a transparent packaging material, coatings of materials known to have light absorptive properties (e.g. chromium) should preferably be avoided. The coating is preferably selected to be relatively hard and scratch resistant, and if for example one of the coatings described in the Examples as selected, there is generally no need to provde a further layer of protective material on top of it. If the coating is desired to be substantially transparent yet substantially opaque to uv radiation of material such as zinc oxide or indium oxide is desirably formed as the coating.

6

TABLE 1

| Example number | Sputtering voltage V | Sputtering current A | Induced bias voltage V | Partial pressure of $O_2$ MT (milliTorr) | Oxygen flow rate/$cm^3$ $min^{-1}$ | Roll speed m $min^{-1}$ |
|---|---|---|---|---|---|---|
| 1 | 440 | 8 | — | 1.4 | 68.3 | 0.25 |
| 2 | 440 | 8 | — | 1.5 | 68 | 0.25 |
| 3 | 550 | 4 | −100 | 2.4 | 66 | 0.25 |
| 4 | 550 | 4 | −100 | 1.4 | 59 | 0.25 |
| 5 | 410 | 1 | −75 | varying | varying | 0.1 |
| 6 | 390 | 0.5 | −75 | not measured | not measured | 0.1 |
| 7 | 320 | 1 | −75 | 1 | 24 | 0.1 |

| Example number | Composition of coating | Coating thickness nm | WVTR gm m$^{-2}$ day$^{-1}$ | Oxygen permeability cm$^3$ m$^{-2}$ day$^{-1}$ atm$^{-1}$ | % Transmission at 550 nm | % Transmission at 360 nm |
|---|---|---|---|---|---|---|
| — | Uncoated Melinex PET (50,000 nm thick) | — | 3.8 | 32.3 | 88% | 83% |
| 1 | Indium oxide | 145 | 0.2 | less than 0.5 | 87% | 34% |
| 2 | Indium oxide | 165 | 0.2 | less than 0.5 | 79% | 42% |
| 3 | Zinc oxide | 53 | 1.43 | 9.9 | 82% | 46% |
| 4 | Zinc oxide | 140 | 0.36 | 2.2[a] | 80% | 18% |
| 5 | Aluminium oxide | 84 | 0.81 | 4.1 | 73% | 56% |
| 6 | Zinc oxide | between[b] 15 & 70 | 2.1 | 14.1 | 86% | 65% |
| 7 | Tin oxide | 63 | 1.9 | 7.4 | 78% | 61% |

Notes

[a] Oxygen used as test gas instead of air.
[b] Difficulties arose in measuring the coating thickness with any degree of precision owing to the refraction index of the coating being similar to that of the substrate.

**0 113 555**

## Claims

1. A package comprising an item or items packaged in a packaging material, the package enclosing a gaseous atmosphere of different composition from that of air, the packaging material being transparent and comprising a plastics substrate bearing a coating of a chemical compound, characterised in that said coating has been deposited on the substrate by an ion plating method or magnetron sputtering method.

2. A package according to Claim 1, additionally characterised in that said coating has been deposited on the substrate by a reactive ion plating method.

3. A package according to Claim 1, additionally characterised in that said coating has been deposited on the substrate by a reactive planar magnetron sputtering method.

4. A package according to any one of the preceding claims, additionally characterised in that the chemical compound is an oxide.

5. A package according to Claim 4, additionally characterised in that the oxide is selected from one or more of aluminium oxide, silica, and tin oxide.

6. A package according to Claim 4, additionally characterised in that the oxide is selected from indium oxide and a mixed oxide of tin and indium.

7. A package according to Claim 4, additionally characterised in that the oxide is zinc oxide.

8. A package according to any one of the preceding claims, additionally characterised in that the plastics is heat sealable.

9. A package according to any one of the preceding claims additionally characterised in that the substrate has a thickness of 40 microns or less.

10. A package according to any one of the preceding claims, additionally characterised in that the coating has a thickness in the range 100 nm to 200 nm.

11. A package according to any one of the preceding claims, additionally characterised in that the packaging material has a coating on one side only, said side defining the exterior surface of the package.

12. A package according to any one of the preceding claims, additionally characterised in that the gaseous atmosphere comprises nitrogen.

13. A package according to any one of the preceding claims additionally characterised in that the package contains electronics components, foodstuff or pharmaceuticals.

## Patentansprüche

1. Packung mit einem oder mehreren in einem Verpackungsmaterial verpackten Gegenständen, die eine Gashülle von anderer Zusammensetzung als Luft einschließt, wobei das Verpackungsmaterial durchsichtig ist und ein Kunststoffsubstrat aufweist, das eine aus einer chemischen Zusammensetzung bestehende Beschichtung trägt dadurch gekennzeichnet, daß die Beschichtung mittels eines Ionenbeschichtungs- oder Magnetronsprühverfahrens auf dem Substrat aufgebracht worden ist.

2. Packung nach Anspruch 1, dadurch gekennzeichnet, daß die Beschichtung mittels eines reaktiven Ionenbeschichtungsverfahrens auf dem Substrat aufgebracht worden ist.

3. Packung nach Anspruch 1, dadurch gekennzeichnet, daß die Beschichtung mittels eines reaktiven Planar-Magnetronsprühverfahrens auf dem Substrat aufgebracht worden ist.

4. Packung nach einem der vorhergehenden Ansprüche, dadurch gekennzeichnet, daß die chemische Verbindung ein Oxid ist.

5. Packung nach Anspruch 4, dadurch gekennzeichnet, daß das Oxid aus einer oder mehreren der Verbindungen Aluminiumoxid, Siliciumoxid und Zinnoxid ausgewählt ist.

6. Packung nach Anspruch 4, dadurch gekennzeichnet, daß das Oxid aus den Verbindungen Indium (III)-Oxid und einem gemischten Oxid von Zinn und Indium ausgewählt ist.

7. Packung nach Anspruch 4, dadurch gekennzeichnet, daß das Oxid Zinkoxid ist.

8. Packung nach einem der vorhergehenden Ansprüche, dadurch gekennzeichnet, daß der Kunststoff heißsiegelfähig ist.

9. Packung nach einem der vorhergehenden Ansprüche, dadurch gekennzeichnet, daß das Substrat eine Dicke von 40 µm oder weniger besitzt.

10. Packung nach einem der vorhergehenden Ansprüche, dadurch gekennzeichnet, daß die Beschichtung eine Dicke im Bereich von 100 nm bis 200 nm aufweist.

11. Packung nach einem der vorhergehenden Ansprüche, dadurch gekennzeichnet, daß das Verpackungsmaterial nur auf einer Seite eine Beschichtung aufweist und diese Seite die Außenfläche der Packung bildet.

12. Packung nach einem der vorhergehenden Ansprüche, dadurch gekennzeichnet, daß die Gashülle Stickstoff umfaßt.

13. Packung nach einem der vorhergehenden Ansprüche, dadurch gekennzeichnet, daß die Packung eletronische Bauteile, Nahrungsmittel oder Arzneimittel enthält.

## Revendications

1. Emballage comprenant un ou des articles emballés dans un matériau d'emballage, l'emballage

9

emprisonnant une atmosphère gazeuse dont la composition est différente de celle de l'air, le matériau d'emballage étant transparent et comprenant un substrat en matière plastique portant un revêtement formé par un composé chimique, emballage caractérisé en ce que ledit revêtement a été déposé sur le substrat par une méthode d'implantation ou placage d'ions ou par une méthode de pulvérisation à l'aide d'un magnétron.

2. Emballage selon la revendication 1, caractérisé en outre en ce que ledit revêtement a été déposé sur le substrat par une méthode d'implantation ou placage d'ions réactifs.

3. Emballage selon la revendication 1, caractérisé en outre en ce que ledit revêtement a été déposé sur le substrat par une méthode de pulvérisation réactive à l'aide d'un magnétron plan.

4. Emballage selon l'une quelconque des revendications précédentes, caractérisé en outre en ce que le composé chimique est un oxyde.

5. Emballage selon la revendication 4, caractérisé en outre en ce que l'oxyde est choisi parmi un ou plusieurs des oxydes suivants: l'oxyde d'aluminium, la silice et l'oxyde d'étain.

6. Emballage selon la revendication 4, caractérisé en outre en ce que l'oxyde est choisi parmi l'oxyde d'indium et un oxyde mixte d'étain et d'indium.

7. Emballage selon la revendication 4, caractérisé en outre en ce que l'oxyde est l'oxyde de zinc.

8. Emballage selon l'une quelconque des revendications précédentes, caractérisé en outre en ce que la matière plastique est soudable à chaud.

9. Emballage selon l'une quelconque des revendications précédentes, caractérisé en outre en ce que le substrat présente une épaisseur égale ou inférieure à 40 micromètres.

10. Emballage selon l'une quelconque des revendications précédentes, caractérisé en outre en ce que le revêtement présente une épaisseur comprise entre 100 nm et 200 nm.

11. Emballage selon l'une quelconque des revendications précédentes, caractérisé en outre en ce que le matériau d'emballage présente un revêtement d'un côté seulement, ledit côté définissant la surface extérieure de l'emballage.

12. Emballage selon l'une quelconque des revendications précédentes, caractérisé en outre en ce que l'atmosphère gazeuse est constituée par de l'azote ou comprend de l'azote.

13. Emballage selon l'une quelconque des revendications précédentes, caractérisé en outre en ce qu'il contient des composants électroniques, un produit alimentaire ou des produits pharmaceutiques.

FIG.3.

FIG.4.

FIG.1.

FIG.2.